# EUROPEAN PATENT APPLICATION

(11) **EP 4 471 811 A1**
(43) Date of publication of application: **04.12.2024**
(21) Application number: 23746869.9
(22) Date of filing: 20.01.2023
(51) Int. Cl.: H01B 13/00, C01B 25/14, H01B 1/06, H01B 1/10

(54) **METHOD FOR PRODUCING SULFIDE-BASED SOLID ELECTROLYTE**

(30) Priority: 25.01.2022 JP 2022009604
(71) Applicant: AGC Inc., Chiyoda-ku Tokyo 100-8405 (JP)
(72) Inventor: FUJII, Naoki, Tokyo 100-8405 (JP)
(74) Representative: Müller-Boré & Partner Patentanwälte PartG mbB
(86) International application number: PCT/JP2023/001784
(87) International publication number: WO 2023/145657

(57) **Abstract**

The present invention pertains to a method for producing a sulfide-based solid electrolyte using a production device comprising an introduction part and a heating unit, the production method comprising: introducing raw material into the introduction part of the production device; and transferring the raw material to the heating unit, which is at a higher temperature than that of the introduction part, and heating and melting the raw material, the dew point of the introduction part being -65°C to -25°C.

## Description

### TECHNICAL FIELD

The present invention relates to a method for producing a sulfide-based solid electrolyte.

### BACKGROUND ART

Lithium-ion secondary batteries are widely used in portable electronic devices such as mobile phones and notebook computers.

In the related art, a liquid electrolyte has been used in a lithium-ion secondary battery, but there is a concern of liquid leakage, ignition, and the like, and it has been necessary to increase the size of a case for safety design. It has also been desired to improve the shortage of battery life and the narrow operating temperature range.

In contrast, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of the case.

The solid electrolytes are roughly classified into sulfide-based solid electrolytes and oxide-based solid electrolytes. Sulfide ions constituting the sulfide-based solid electrolytes have higher polarizability and higher ion conductivity than those of oxide ions constituting the oxide-based solid electrolytes. Examples of the sulfide-based solid electrolytes include sulfide-based solid electrolytes containing lithium element, sulfur element, and phosphorus element, and known methods for producing such solid electrolytes include a sealed glass tube method, a mechanical milling method, and a melting method.

Among these methods, as an example of the melting method, Patent Literature 1 discloses a method for producing a lithium-ion conductive material, which includes (1) a step of melting and vitrifying a composite compound containing lithium, phosphorus, and sulfur as a composition, and (2) a step of obtaining a sulfide glass by rapidly cooling the molten glass.

Patent Literature 2 discloses a method for obtaining a sulfide-based lithium-ion conductive solid electrolyte by, when synthesizing the sulfide-based lithium-ion conductive solid electrolyte, performing heating and melting in a flow of an inert gas containing moisture at 100 ppm or less, followed by cooling.

### CITATION LIST

### PATENT LITERATURE

Patent Literature 1: JP2012-043654A
Patent Literature 2: JPH06-279050A

### SUMMARY OF INVENTION

### TECHNICAL PROBLEM

However, compounds such as sulfides as raw materials for the sulfide-based solid electrolytes easily react with oxygen. It has been found that oxygen is likely to be adsorbed and present on a surface of such raw materials, and that if the raw materials are heated and melted in this state, the adsorbed oxygen may react with other components in the raw materials, resulting in a decrease in lithium-ion conductivity of the resulting sulfide-based solid electrolytes.

Therefore, an object of the present invention is to provide a method for producing a sulfide-based solid electrolyte that can prevent a reaction between oxygen adsorbed to a raw material and other components in the raw material during heating and melting, thereby preventing a decrease in lithium-ion conductivity of the resulting sulfide-based solid electrolyte.

### SOLUTION TO PROBLEM

As a result of extensive research, the present inventors have found that the above-mentioned problem can be solved by introducing the raw material into an introduction portion in which a dew point is adjusted to a predetermined range, and then transferring the raw material to a heating portion to heat and melt the raw material, and have thus completed the present invention.

That is, the present invention relates to the following 1 to 6.
1. A method for producing a sulfide-based solid electrolyte using a production apparatus including an introduction portion and a heating portion, the method including:
   introducing a raw material into the introduction portion of the production apparatus; and
   transferring the raw material to the heating portion whose temperature is higher than that of the introduction portion, and then heating and melting the raw material, in which
   a dew point of the introduction portion is -65°C to -25°C.
2. The method for producing a sulfide-based solid electrolyte according to the above 1, in which the temperature of the heating portion is 400°C or higher, and the temperature of the introduction portion is 300° C or lower.
3. The method for producing a sulfide-based solid electrolyte according to the above 1 or 2, in which a difference in temperature between the heating portion and the introduction portion is 200°C or more.
4. The method for producing a sulfide-based solid electrolyte according to the above 1 or 2, the method further including: supplementing a predetermined element during the heating and melting.
5. A sulfide-based solid electrolyte block, containing Li, P, S, and Ha,
   in which Ha is at least one selected from the group consisting of F, Cl, Br, and I,
   in the sulfide-based solid electrolyte block, a ratio of a P-O bond to a total of a P-S bond and the P-O bond is less than 5%, and
   the sulfide-based solid electrolyte block has a thickness of 10 mm or less.
6. The sulfide-based solid electrolyte block according to the above 5, in which when the sulfide-based solid electrolyte block is in a powder form having an average particle diameter of 10 µm and compressed under a pressure of 380 MPa to form a powder compact, a lithium-ion conductivity thereof measured at 25°C is 2.0 mS/cm or more.

### ADVANTAGEOUS EFFECTS OF INVENTION

According to the method for producing a sulfide-based solid electrolyte of the present invention, it is possible to prevent a reaction between oxygen adsorbed to a raw material and other components in the raw material during heating and melting, so that a sulfide-based solid electrolyte having an excellent lithium-ion conductivity can be produced.

### BRIEF DESCRIPTION OF DRAWINGS

FIG. 1 is a schematic diagram showing an example of a production apparatus used in a production method according to an embodiment of the present invention.
FIG. 2 is a flowchart illustrating the production method according to the embodiment of the present invention.

### DESCRIPTION OF EMBODIMENTS

Hereinafter, the present invention is described in detail, but the present invention is not limited to the following embodiment and can be freely modified and implemented without departing from the gist of the present invention. In addition, "to" indicating a numerical range is used to include numerical values written before and after it as a lower limit value and an upper limit value.

A method for producing a sulfide-based solid electrolyte according to the present embodiment (hereinafter also referred to as the present production method) is a method for producing a sulfide-based solid electrolyte using a production apparatus including an introduction portion and a heating portion, the method including introducing a raw material into the introduction portion of the production apparatus, and transferring the raw material to the heating portion whose temperature is higher than that of the introduction portion, and then heating and melting the raw material, in which a dew point of the introduction portion is -65°C to -25°C.

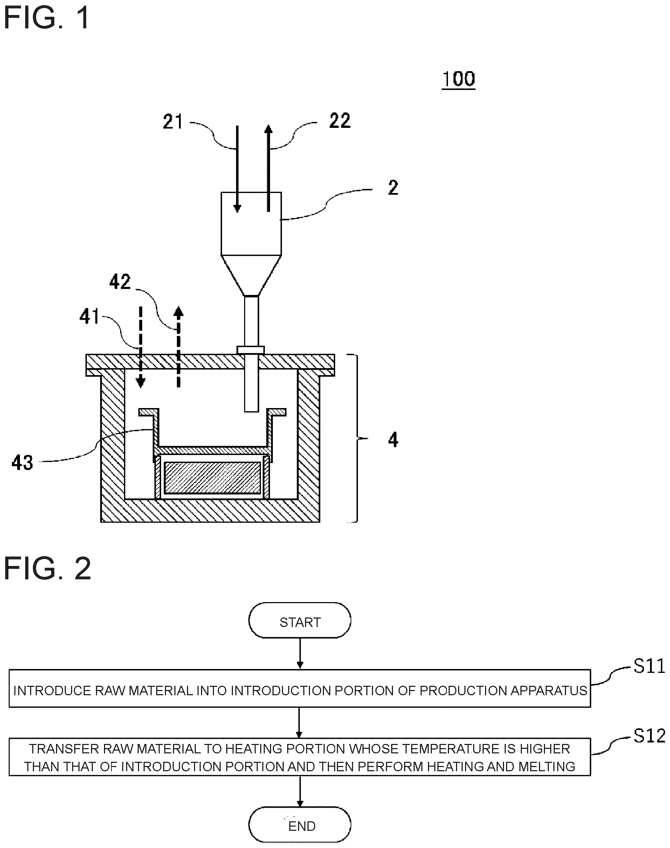

That is, as shown in FIG. 2, the present production method includes a step S11 of introducing the raw material into the introduction portion of the production apparatus, and a step S12 of transferring the raw material to the heating portion whose temperature is higher than that of the introduction portion and then heating and melting the raw material.

### (Sulfide-based Solid Electrolyte)

In the present production method, type and composition of the produced sulfide-based solid electrolyte are not particularly limited, and can be appropriately selected depending on application, desired physical properties, and the like. Examples of the sulfide-based solid electrolyte include a sulfide-based solid electrolyte containing Li, P, and S, and a sulfide-based solid electrolyte containing Li, P, S, and Ha. Here, Ha represents at least one element selected from halogen elements. Specifically, Ha is, for example, at least one element selected from the group consisting of F, Cl, Br, and I. In order to obtain an argyrodite crystal structure, Ha more preferably contains at least one of Cl and Br, still more preferably contains Cl, and even more preferably is elemental Cl or a mixture of Cl and Br.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase.

The sulfide-based solid electrolyte preferably includes a crystal structure from the viewpoint of improving a lithium-ion conductivity. In the case where the sulfide-based solid electrolyte includes a crystal structure, the crystal contained in the sulfide-based solid electrolyte is preferably an ion-conductive crystal. Specifically, the ion-conductive crystal is a crystal having a lithium-ion conductivity of preferably more than 10⁻⁴ S/cm, and more preferably more than 10⁻³ S/cm.

More specifically, examples of the sulfide-based solid electrolyte include a sulfide-based solid electrolyte containing an LGPS crystal such as Li₁₀GeP₂S₁₂, a sulfide-based solid electrolyte containing an argyrodite crystal such as Li₆PS₅Cl₁, Li-P-S-Ha-based crystallized glass, and LPS crystallized glass such as Li₇P₃S₁₁. The sulfide-based solid electrolyte may be a combination of these, or may contain a plurality of types of crystals having different compositions or crystal structures. From the viewpoint of an excellent lithium-ion conductivity, a sulfide-based solid electrolyte containing an argyrodite crystal is preferable as the sulfide-based solid electrolyte.

When the sulfide-based solid electrolyte contains crystals, the crystal structure thereof preferably contains an argyrodite type from the viewpoint of symmetry of the crystal structure. Highly symmetric crystals tend to allow lithium-ion conduction paths to extend in three dimensions, which is favorable when a powder is formed.

In order to obtain the argyrodite crystal structure, the crystal phase includes Ha in addition to Li, P, and S. Ha more preferably includes at least one of Cl and Br, still more preferably includes Cl, and is even more preferably elemental Cl or a mixture of Cl and Br.

The argyrodite crystal can be defined as containing Li, P, S, and Ha, and having peaks at positions where 2θ = 15.7 ± 0.5° and 30.2 ± 0.5° in an X-ray powder diffraction (XRD) pattern. In addition to the above peaks, the XRD pattern preferably has peaks at positions where 2θ = 18.0 ± 0.5°, and more preferably has peaks at positions where 2θ = 25.7 ± 0.5°.

A composition of the sulfide-based solid electrolyte is determined by composition analysis using ICP emission spectrometry, atomic absorption, ion chromatography, or the like. A type of the crystal contained in the sulfide-based solid electrolyte can be analyzed from an X-ray powder diffraction (XRD) pattern.

### (Raw Material)

The raw material used in the present production method can be any of the above-mentioned various known raw materials for sulfide-based solid electrolytes. For example, when the sulfide-based solid electrolyte contains Li, P, and S, the raw material contains lithium element (Li), sulfur element (S), and phosphorus element (P). As such a raw material, Li-containing substances (components), such as elemental Li or Li-containing compounds, S-containing substances (components), such as elemental S or S-containing compounds, P-containing substances (components), such as elemental P or P-containing compounds, and the like can be used in appropriate combination. The Li-containing compound, the S-containing compound, and the P-containing compound may be a compound containing two or more elements selected from Li, S, and P. For example, phosphorus pentasulfide (P₂S₅) may be used as a compound serving as both the S-containing compound and the P-containing compound.

Examples of the Li-containing substances include lithium compounds such as lithium sulfide (Li₂S), lithium carbonate (Li₂CO₃), lithium sulfate (Li₂SO₄), lithium oxide (Li₂O), and lithium hydroxide (LiOH), and metallic lithium. From the viewpoint of ease of handling, lithium sulfide is preferably used.

On the other hand, since lithium sulfide is expensive, it is preferable to use a lithium compound other than lithium sulfide, metallic lithium, or the like from the viewpoint of reducing a production cost of the sulfide-based solid electrolyte. Specifically, in this case, the raw material preferably contains one or more selected from the group consisting of metallic lithium, lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

Examples of the S-containing substances include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). The S-containing substance is preferably phosphorus sulfide, and more preferably phosphorus pentasulfide (P₂S₅), from the viewpoint of preventing containing of elements other than the elements constituting the target sulfide-based solid electrolyte. These substances may be used alone or in combination of two or more kinds thereof. Note that phosphorus sulfide can be considered as a compound that serves as both the S-containing substance and the P-containing substance.

Examples of the P-containing substances include phosphorus sulfides such as phosphorus trisulfide (P₂S₃) and phosphorus pentasulfide (P₂S₅), phosphorus compounds such as sodium phosphate (Na₃PO₄), and elemental phosphorus. The P-containing substance is preferably phosphorus sulfide, and more preferably phosphorus pentasulfide (P₂S₅), from the viewpoint of preventing containing of elements other than the elements constituting the target sulfide-based solid electrolyte.

These substances may be used alone or in combination of two or more kinds thereof.

In the present production method, the raw material can be obtained by appropriately mixing, for example, the above-mentioned substances depending on the composition of the desired sulfide-based solid electrolyte. A mixing ratio is not particularly limited, but for example, a molar ratio Li/P of Li to P in the raw material is preferably 65/35 or more, and more preferably 70/30 or more.

Examples of a preferred combination of the above compounds include a combination of Li₂S and P₂S₅. When Li₂S and P₂S₅ are combined, the molar ratio Li/P of Li to P is preferably from 65/35 to 88/12, and more preferably from 70/30 to 88/12. By adjusting the mixing ratio so that the amount of P₂S₅ is relatively smaller than Li₂S, it becomes easier to prevent elimination of sulfur and phosphorus components during heat treatment due to a smaller boiling point of P₂S₅ compared to a melting point of Li₂S.

The raw material in the present production method may contain further substances (compounds and the like) in addition to the above substances depending on the composition of the desired sulfide-based solid electrolyte or as additives or the like.

For example, when producing a sulfide-based solid electrolyte containing a halogen element such as F, Cl, Br or I, the raw material preferably contains a halogen element (Ha). In this case, the raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of preventing containing of elements other than the elements constituting the target sulfide-based solid electrolyte. These compounds may be used alone or in combination of two or more kinds thereof.

Note that the lithium halide may also be a Li-containing compound. When the raw material contains lithium halide, some or all of Li in the raw material may be derived from the lithium halide.

When the raw material contains a halogen element, a molar equivalent of Ha relative to P in the raw material is preferably 0.2 molar equivalents or more, and more preferably 0.5 molar equivalents or more, from the viewpoint of lowering a melting point when the raw material is heated and melted. From the viewpoint of improving stability of the resulting sulfide-based solid electrolyte, the molar equivalent of Ha is preferably 4 molar equivalents or less, and more preferably 3 molar equivalents or less.

From the viewpoint of improving a glass formation state of the resulting sulfide-based solid electrolyte, the raw material preferably contains sulfides such as SiS₂, B₂S₃, GeS₂, and Al₂S₃. By facilitating the glass formation, when glass is obtained by rapid cooling, glass can be obtained even when a cooling rate is reduced, thereby reducing a load on an apparatus. From the viewpoint of imparting moisture resistance to the sulfide solid electrolyte, it is also preferable that oxides such as SiO₂, B₂O₃, GeO₂, Al₂O₃, P₂O₅ are contained.

These compounds may be used alone or in combination of two or more kinds thereof.

An addition amount of these compounds is preferably 0.1 weight% or more, and more preferably 0.5 weight% or more with respect to a total amount of the raw material. The addition amount is preferably 50 weight% or less, and more preferably 40 weight% or less.

As the raw material, the above-mentioned various substances can be used in combination. When a plurality of substances are combined as the raw material, the raw material may be mixed using, for example, a known mixer. As the mixer, for example, a V-type mixer, a W-type mixer, a ribbon-type mixer, or the like can be used.

In the present production method, the sulfide-based solid electrolyte is obtained by heating and melting the raw material, but the raw material may be subjected to a heat treatment in advance before the heating and melting. By undergoing the heat treatment, the raw material can be heated and melted from a state where the composition thereof is closer to a target composition, making it easier to control the composition. Note that a part of the raw material may be subjected to the heat treatment and then mixed with the remaining raw material. The raw material after the heat treatment may contain a compound containing Li, P and S, such as Li₄P₂S₆ and Li₃PS₄. Conditions for the heat treatment are not particularly limited, but it is preferable to hold a temperature at 100°C to 500°C for 0.1 hour to 5 hours, for example.

### (Method for Producing Sulfide-based Solid Electrolyte)

A production apparatus used in the present production method includes an introduction portion and a heating portion. The present production method includes introducing the raw material into the introduction portion of the production apparatus (introduction step), and transferring the raw material to the heating portion whose temperature is higher than that of the introduction portion, and then heating and melting the raw material (heating and melting step). Here, a dew point of the introduction portion is -65°C to -25°C.

As described above, compounds serving as the raw material of the sulfide-based solid electrolyte, particularly sulfides and the like, react easily with oxygen. The present inventors have found that oxygen is easily adsorbed and present on a surface of such raw material, and that when the raw material is heated and melted in a state where oxygen is adsorbed on the surface thereof, the adsorbed oxygen reacts with other components in the raw material, which may result in a decrease in an ionic conductivity of the resulting sulfide-based solid electrolyte.

In this regard, the present inventors have found that by introducing the raw material into the introduction portion whose dew point is adjusted to a predetermined range, and then transferring the raw material to the heating portion and then heating and melting the raw material, it is possible to prevent the reaction between oxygen adsorbed to the raw material and other components in the raw material, and thus completed the present invention. Reasons therefor are thought to be as follows. That is, in the present production method, the dew point of the introduction portion is set within a predetermined range, and the inside of the introduction portion is made to have a relatively moisture-rich atmosphere. It is believed that by exposing the raw material to the relatively moisture-rich atmosphere before heating and melting, an appropriate amount of moisture is adsorbed onto the surface of the raw material, weakening an ability thereof to adsorb oxygen. As a result, it is presumed that the adsorbed oxygen is more easily desorbed from the raw material during the subsequent heating and melting, and the reaction between the adsorbed oxygen and other components in the raw material can be prevented.

FIG. 1 is a schematic diagram showing an example of the production apparatus used in the present production method. A production apparatus 100 includes an introduction portion 2 and a heating portion 4. A dew point in the introduction portion 2 is -65°C to -25°C, and a temperature in the heating portion 4 is higher than a temperature in the introduction portion 2. It is preferable that each of the introduction portion 2 and the heating portion 4 includes a mechanism for supplying gas to the inside thereof and discharging gas from the inside. In FIG. 1, a supply gas 21 is supplied to the introduction portion 2, and an exhaust gas 22 is exhausted from the introduction portion 2. Similarly, a supply gas 41 is supplied to the heating portion 4, and an exhaust gas 42 is exhausted from the heating portion 4. By providing such a mechanism, it is easy to adjust the atmosphere in the introduction portion and the heating portion to a desired one.

### (Introduction Step)

In the present production method, first, the above-mentioned raw material is introduced into the introduction portion 2. When introducing the raw material into the introduction portion, an introduction method is not particularly limited as long as the dew point can be preferably maintained at -65°C to -10°C. Examples of the introduction method includes a method in which the raw material and an opening of the introduction portion are covered with a polyethylene bag or the like before opening the introduction portion, and a dew point in the covered space is adjusted to the above-mentioned preferable range, and then the opening is opened and the raw material is introduced.

The atmosphere when the raw material is introduced into the introduction portion 2 has a dew point of preferably -25°C or lower, and more preferably -30°C or lower, from the viewpoint of preventing generation of hydrogen sulfide from the raw material. For a relatively short period of time, for example a total of 10 minutes or less, the dew point may be higher than -25°C, for example up to about -10°C. From the viewpoint of allowing the surface of the raw material to adequately adsorb moisture, the dew point is preferably -65°C or higher, and more preferably -55°C or higher. That is, the dew point of the atmosphere when the raw material is introduced into the introduction portion 2 is preferably -65°C to -10°C, more preferably -65°C to -25°C, and further preferably -55°C to -30°C. The atmosphere when the raw material is introduced into the introduction portion is preferably an atmosphere of an inert gas, and specific examples thereof include an atmosphere of nitrogen gas, argon gas, or helium gas. In the atmosphere of an inert gas, an oxygen concentration is preferably 10,000 ppm or less, and more preferably 1,000 ppm or less. Note that regarding the oxygen concentration, ppm means a volume-based ratio (volume ppm).

### (Introduction Portion)

The dew point of the introduction portion is -65°C to -25°C. The dew point of the introduction portion is -65°C or higher, preferably -60°C or higher, and more preferably -55°C or higher. By having a dew point equal to or higher than the above value, an appropriate amount of moisture is likely to be present in the introduction portion, making it easy to prevent the reaction between the adsorbed oxygen and other components in the raw material during heating and melting. On the other hand, the dew point of the introduction portion is -25°C or lower, preferably -30°C or lower, and more preferably -40°C or lower. By keeping the dew point at or below the above value, it is possible to prevent deterioration of the raw material due to an excessive amount of moisture in the introduction portion. That is, the dew point of the introduction portion is -65°C to -25°C, preferably -60°C to -30°C, and more preferably -55°C to -40°C. The dew point can be adjusted by, for example, selecting and using a gas with an appropriate purity or by mixing gases in an appropriate ratio.

The atmosphere in the introduction portion is preferably an atmosphere of an inert gas, and specific examples thereof include an atmosphere of nitrogen gas or argon gas. In the atmosphere of an inert gas, the oxygen concentration is preferably 1,000 ppm or less, and more preferably 300 ppm or less.

It is preferable that the gas is supplied to the introduction portion at a predetermined replacement rate. A preferred embodiment of the gas to be supplied is the same as the gas constituting the atmosphere in the introduction portion.

In the present specification, the replacement rate is expressed as (an amount of the supply gas)/(an amount of a volume of a space to which the gas is supplied) per minute. For example, when the amount of gas supplied per minute is equal to the volume of the introduction portion, the replacement rate is 1 (min⁻¹). In the introduction portion, the gas is preferably supplied at a replacement rate of 1/10,000 (min⁻¹) to 100 (min⁻¹), and more preferably 1/100 (min⁻¹) to 10 (min⁻¹), and still more preferably 1/10 (min⁻¹) to 5 (min⁻¹). The replacement rate is preferably 1/10,000 (min⁻¹) or more, and more preferably 1/100 (min⁻¹) or more, and still more preferably 1/10 (min⁻¹) or more. A replacement rate equal to or higher than the above value is preferable since it is possible to prevent a moisture concentration from becoming locally high, and moisture can be continuously supplied appropriately. The replacement rate is preferably 100 (min⁻¹) or less, and more preferably 10 (min⁻¹) or less, and still more preferably 5 (min⁻¹) or less. A replacement rate equal to or lower than the above value is preferable since it is possible to prevent the raw material from being scattered by an air flow.

The temperature in the introduction portion is preferably 0°C to 500°C, more preferably 20°C to 300°C, and still more preferably 50°C to 200°C. The temperature is preferably 0°C or higher, more preferably 20°C or higher, and still more preferably 50°C or higher. A temperature equal to or higher than the above value is preferable since the adsorption of moisture to the raw material can be promoted. The temperature in the introduction portion is preferably 500°C or less, more preferably 300°C or less, and still more preferably 200°C or less. A temperature equal to or lower than the above value is preferable since adhesion of the raw material can be prevented.

A time for which the raw material is held in the introduction portion is preferably 1 minute to 6 hours, more preferably 10 minutes to 3 hours, and still more preferably 30 minutes to 1 hour. From the viewpoint of production, a relatively short holding time is preferable, but from the viewpoint of more effectively adsorbing moisture to the raw material, the time is preferably 1 minute or more, more preferably 10 minutes or more, and still more preferably 30 minutes or more. By setting the holding time to the above value or more, it becomes easier to obtain a sufficient effect of preventing the reaction between the adsorbed oxygen and other components in the raw material during heating and melting. The time for which the raw material is held in the introduction portion is preferably 6 hours or less, more preferably 3 hours or less, and still more preferably 1 hour or less. By keeping the holding time equal to or lower than the above value, deterioration of the raw material due to moisture in the atmosphere can be prevented.

### (Heating and Melting Step)

In the heating and melting step, first, the raw material introduced into the introduction portion 2 is transferred to the heating portion 4 whose temperature is higher than that of the introduction portion 2. The heating portion 4 is not particularly limited as long as it is a device capable of heating and melting the raw material, and is, for example, a heating furnace. Depending on a configuration of the heating portion 4, the raw material may be transferred directly to the inside of the heating portion 4, or a container or the like may be provided inside the heating portion 4 and the raw material may be transferred into the container. In the configuration of FIG. 1, a heat-resistant container 43 is disposed inside the heating portion 4, and the raw material is transferred into the heat-resistant container 43. The transferring method is not particularly limited, and examples thereof include a method of dropping the raw material from the introduction portion 2, and a method of transporting the raw material by air flow.

The heat-resistant container 43 is not particularly limited, and examples thereof include a heat-resistant container made of carbon, a heat-resistant container containing an oxide such as silica, a silica glass, a borosilicate glass, an aluminosilicate glass, alumina, zirconia, and mullite, a heat-resistant container containing a nitride such as silicon nitride and boron nitride, and a heat-resistant container containing a carbide such as silicon carbide. These heat-resistant containers may be a container in which a bulk is formed of the above-described material, or a layer of carbon, an oxide, a nitride, a carbide, or the like is formed. The shape of the heat-resistant container is not particularly limited, and may be any shape, such as a prismatic shape, a cylindrical shape, or a conical shape.

The raw material may be transferred from the introduction portion 2 to the heating portion 4 in a constant amount continuously or in a predetermined amount intermittently.

Next, the raw material transferred to the heating portion 4 is heated and melted.

The temperature of the heating portion is higher than the temperature of the introduction portion, and is preferably 300°C to 1000°C, more preferably 400°C to 950°C, and still more preferably 500°C to 900°C. The temperature of the heating portion is preferably 300°C or higher, more preferably 400°C or higher, and still more preferably 500°C or higher. It is preferable that the temperature of the heating portion is equal to or higher than the above value so that the raw material can be easily melted at this temperature. The temperature of the heating portion is preferably 1000°C or less, more preferably 950°C or less, and still more preferably 900°C or less. It is preferable that the temperature of the heating portion is equal to or lower than the above value so that an amount of components eliminated from the raw material during heating and melting is unlikely to become excessive.

Examples of more preferred temperatures for the heating portion and the introduction portion include a temperature of 400°C or higher for the heating portion and a temperature of 300°C or lower for the introduction portion. It is preferable that the heating portion and the introduction portion are in the above-mentioned temperature ranges so that the adsorption of moisture on the surface of the raw material in the introduction portion is promoted and desorption of oxygen in the heating portion is promoted.

A difference in temperature between the heating portion and the introduction portion is preferably 200°C or more, more preferably 400°C or more, and still more preferably 500°C or more. By ensuring that the difference in temperature is equal to or greater than the above value, moisture can be adsorbed onto the surface of the raw material in the introduction portion while preventing deterioration of the raw material due to moisture, and the raw material can be rapidly reached to the melting temperature in the heating portion, which is believed to provide favorable conditions for the oxygen desorption. Considering the respective suitable temperatures of the heating portion and the introduction portion, the difference in temperature is preferably 1,000°C or less, more preferably 900°C or less, and still more preferably 800°C or less. The difference in temperature between the heating portion and the introduction portion may be 200°C to 1,000°C, 400°C to 900°C, or 500°C to 800°C. Note that in the present specification, the difference in temperature between the heating portion and the introduction portion means (the temperature of the heating portion) - (the temperature of the introduction portion).

A method for heating the heating portion is not particularly limited, and may be a known heating method using an external heating device or the like.

The heating portion has a dew point of preferably -75°C to -25°C, more preferably - 70°C to -35°C, and still more preferably -40°C to -65°C. The dew point in the heating portion is preferably -25°C or lower, more preferably -35°C or lower, and still more preferably -40°C or lower. By keeping the dew point equal to or lower than the above value, it is possible to prevent deterioration caused by a reaction between moisture and melt components during the heating and melting. The dew point in the heating portion is preferably -75°C or higher, more preferably -70°C or higher, and still more preferably -65°C or higher. When the dew point is equal to or higher than the above value, a production cost can be easily reduced.

An atmosphere in the heating portion is preferably an atmosphere of an inert gas, and specific examples thereof include an atmosphere of nitrogen gas or argon gas. In the atmosphere of an inert gas, the oxygen concentration is preferably 1,000 ppm or less, and more preferably 300 ppm or less.

It is also preferable that the atmosphere in the heating portion contains a gas that easily reacts with oxygen. Specific examples of the gas that easily reacts with oxygen include gases containing sulfur element and carbon monoxide. In the heating and melting step, since the raw material containing the sulfur element such as sulfides is melted, a gas containing the sulfur element is preferred from the viewpoint that the contained elements are common and it is easy to prevent unwanted components from being mixed into the melt. Examples of the gas containing the sulfur element include a gas containing a compound containing the sulfur element or elemental sulfur, such as a sulfur gas, hydrogen sulfide gas, carbon disulfide gas, and sulfur dioxide. The gas containing the sulfur element is preferably the sulfur gas or the hydrogen sulfide gas in terms of reactivity with oxygen.

Since the atmosphere in the heating portion contains a gas that easily reacts with oxygen, when the raw material is heated and melted, the adsorbed oxygen released from the raw material may react with the gas that easily reacts with oxygen to form a different compound. In this way, it is possible to further prevent the decrease in ionic conductivity caused by the adsorbed oxygen. The heating portion may contain a small amount of oxygen in addition to the oxygen adsorbed to the raw material. By heating and melting in an atmosphere containing a gas that easily reacts with oxygen, the reaction between the oxygen and the components in the raw material can also be prevented.

The gas containing the sulfur element is obtained by heating a sulfur source. Therefore, the sulfur source is not particularly limited as long as it is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to the heating portion using an inert gas such as a N₂ gas, an argon gas, and a helium gas as a carrier gas to obtain the gas atmosphere containing the sulfur element.

The temperature at which the sulfur source is heated may be appropriately selected depending on the type of the sulfur source used. For example, when elemental sulfur is used as the sulfur source, the heating temperature is preferably 250°C or higher and 750°C or lower.

Alternatively, among the sulfur sources described above, solid sulfur sources such as elemental sulfur, H₂S, Bi₂S₃, iron sulfides, copper sulfides, and CS₂ may be pneumatically transported in a fine state such as powder to the heating portion by a carrier gas to obtain the gas atmosphere containing the sulfur element.

### (Step of Supplementing Predetermined Element)

The present production method may include a step of supplementing a predetermined element during heating and melting. In the present production method, oxygen adsorbed to the raw material is easily desorbed during heating and melting. In this case, elemental components other than oxygen contained in the raw material may be eliminated together with oxygen. There are cases where a predetermined element or compound is easily eliminated due to reasons such as the presence of a plurality of compounds with large differences in boiling points in the raw material. For these reasons, during heating and melting, a predetermined elemental component may become insufficient relative to the target composition of the sulfide-based solid electrolyte. The present production method may further include a step of supplementing an element that may be insufficient in this way.

For example, the insufficient element may be one or more elements selected from elements that can be contained in the sulfide-based solid electrolyte, such as the sulfur element, lithium element, and phosphorus element. Examples of a method for supplementing these elements include a method of further introducing a compound containing the element into the heating portion. The compound to be introduced may be in any state of solid, amorphous, liquid and gas, and may be introduced into the heating portion via the introduction portion, or may be introduced into the heating portion as a supply gas. The compound to be introduced may be, for example, one selected from the substances used as the raw material described above, or a mixture of two or more thereof.

When the insufficient element is the sulfur element, sulfur can be introduced into the melt by heating and melting the raw material in the above-mentioned gas atmosphere containing the sulfur element. In this way, it is possible to introduce a sufficient amount of sulfur and supplement the sulfur element for obtaining a sulfide-based solid electrolyte having a target composition.

By introducing sulfur while the raw material is in a molten liquid phase, it becomes easier to introduce sulfur uniformly throughout the melt, and the composition of the resulting sulfide-based solid electrolyte tends to be uniform. The melt is decreased in viscosity by fluidization of a solid and is in a state of being highly uniform. Therefore, solubility and diffusibility of the gas containing the sulfur element is high in the melt. It is more preferable to perform the heating and melting while stirring the melt and the gas containing the sulfur element, so that it becomes easier to obtain the above-mentioned effects.

The heating and melting time is preferably 0.1 hour or more, more preferably 0.5 hours or more, still more preferably 0.7 hours or more, and even more preferably 1 hour or more from the viewpoint of improving homogeneity of the melt and the resulting sulfide-based solid electrolyte. As long as the deterioration or decomposition of the components in the melt due to heating is within an acceptable range, there is no particular upper limit to the heating and melting time, and the time may be relatively long. As a practical range, 100 hours or less is preferable, 50 hours or less is more preferable, and 24 hours or less is still more preferable.

A pressure during the heating and melting is not particularly limited, but a normal pressure or a slight pressure is preferred, and normal pressure is more preferred. When heating and melting is performed in a gas atmosphere containing the sulfur element for supplementing the sulfur element, a sulfur partial pressure is preferably set to 10⁻³ atm to 10⁰ atm. By setting the sulfur partial pressure in this range, sulfur can be introduced efficiently at a low cost without complicating the apparatus.

### (Cooling Step)

The present production method preferably further includes a step of cooling the melt obtained by heating and melting to obtain a solid. The cooling may be performed by a known method, and the method is not particularly limited. After the heating and melting step, the cooling may be continued in the heating portion 4, or the melt may be removed from the heating portion 4 and then cooled.

Examples of a more specific cooling method include a method in which the melt is poured onto a plate-like body made of carbon or the like and then cooled, and a method in which the melt is poured into a narrow gap to be formed into a thin shape. When the melt is poured onto a plate-like body and then cooled, it is preferable that a thickness of the melt after being poured and a thickness of the resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more. When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

A cooling rate is preferably 0.01°C/sec or more, more preferably 0.05°C/sec or more, and still more preferably 0.1°C/sec or more, from the viewpoint of maintaining the composition obtained by the heating and melting step. An upper limit value of the cooling rate is not particularly determined, and a cooling rate of a twin roller, whose rapid cooling rate is generally said to be the highest, is 1,000,000°C/sec or less.

Here, in the case where the obtained solid is desired to be an amorphous sulfide-based solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin roller, whose rapid cooling rate is generally said to be the highest, is 1,000,000°C/sec or less.

On the other hand, it is also possible to obtain a sulfide-based solid electrolyte having a specific crystal structure by performing a slow cooling in the cooling step to crystallize at least a part of the solid or a sulfide-based solid electrolyte constituted by a crystal phase and an amorphous phase. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be less than 10°C/sec, or may be 5°C/sec or less. Note that the cooling rate may be appropriately adjusted according to crystallization conditions.

Here, crystals contained in the sulfide-based solid electrolyte are preferably ion-conductive crystals. Specifically, the ion-conductive crystals are crystals having a lithium-ion conductivity of more than 10⁻⁴ S/cm, and more preferably more than 10⁻³ S/cm.

When it is desired that the solid obtained after cooling is a sulfide-based solid electrolyte containing a crystalline phase, it is preferable that the melt obtained in the heating and melting step contains a compound that serves as a crystal nucleus. In this way, it is easier for crystals to precipitate in the cooling step. A method for containing a compound that serves as a crystal nucleus in the melt is not particularly limited, but examples thereof include a method of adding a compound that serves as a crystal nucleus to the raw material or a heated raw material, and a method of adding a compound that serves as a crystal nucleus to the melt during heating and melting.

Examples of the compound that serves as a crystal nucleus include oxides, oxynitrides, nitrides, carbides, other chalcogen compounds, and halides. The compound that serves as a crystal nucleus is preferably a compound having a certain degree of compatibility with the melt. Note that a compound that is completely incompatible with the melt cannot serve as a crystal nucleus.

When it is desired that the solid obtained after cooling is a sulfide-based solid electrolyte containing a crystalline phase, a content of the compound that serves as a crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as a crystal nucleus in the melt is preferably 20 mass% or less, and more preferably 10 mass% or less.

If it is desired that the solid obtained after cooling is an amorphous sulfide-based solid electrolyte, it is preferable that the melt does not contain any compound that serves as a crystal nucleus, or that a content of such compound is a predetermined amount or less. Specifically, the content of the compound that serves as a crystal nucleus in the melt is preferably 1 mass% or less, and more preferably 0.1 mass% or less. The content of the compound that serves as a crystal nucleus in the melt may be less than 0.01 mass%.

### (Re-heating Step)

High-temperature crystallization of an amorphous sulfide-based solid electrolyte or a sulfide-based solid electrolyte containing an amorphous phase can be promoted by a heating treatment (post-annealing). When the solid obtained in the cooling step is an amorphous sulfide-based solid electrolyte or a sulfide-based solid electrolyte containing an amorphous phase, the present production method may further include re-heating the solid. By re-heating a sulfide-based solid electrolyte containing sulfide-based solid electrolyte crystals, ions in the crystal structure can be re-arranged, thereby increasing the lithium-ion conductivity. Note that the re-heating treatment in the present step refers to at least one of heating the solid obtained by cooling in the cooling step for crystallization and re-arranging ions in the crystal structure. Hereinafter, the heat treatment of these amorphous sulfide-based solid electrolytes or sulfide-based solid electrolytes containing an amorphous phase, including the crystallization treatment, is referred to as the re-heating treatment.

By controlling temperature and time of the re-heating treatment, proportions of the amorphous phase and the crystalline phase can be controlled, and thus the lithium-ion conductivity can be controlled, which is preferable. In order to increase the lithium-ion conductivity, it is preferable to increase the ratio of the crystalline phase. Specifically, the ratio of the crystalline phase is preferably 10 mass% or more, and more preferably 20 mass% or more. From the viewpoint of mechanical strength, the ratio of the crystalline phase is preferably 99.9 mass% or less, and more preferably 99 mass% or less. The ratio of the crystalline phase can be measured by X-ray diffraction (XRD) measurement.

Specific conditions for the re-heating treatment are not particularly limited and may be adjusted according to the composition of the sulfide-based solid electrolyte and the like. The re-heating treatment is preferably performed in an atmosphere of an inert gas such as nitrogen gas, argon gas, or helium gas. The re-heating treatment may be performed in an atmosphere of a gas containing the sulfur element. The oxygen concentration is preferably low, and the oxygen concentration is preferably 1,000 ppm or less, and more preferably 300 ppm or less.

As an example, the temperature of the re-heating treatment is preferably equal to or higher than the glass transition temperature of the sulfide-based solid electrolyte, and specifically, the temperature is preferably 200°C or higher, and more preferably 250°C or higher. An upper limit of the temperature is not particularly limited as long as it is within a range in which the sulfide-based solid electrolyte can be prevented from being thermally deteriorated or thermally decomposed by heating and the effects of the present invention are not impaired, and for example, the temperature is preferably 650°C or less, and more preferably 550°C or less.

The time for the re-heating treatment is preferably 0.1 hour or more, and more preferably 0.2 hours or more, in order to ensure crystal precipitation. From the viewpoint of preventing the thermal deterioration due to heating, the time for the re-heating treatment is preferably 3 hours or less, and more preferably 2 hours or less.

The shape of the sulfide-based solid electrolyte obtained by the present production method is not particularly limited, and may be, for example, the above-mentioned block form (sulfide-based solid electrolyte block) or powder form (sulfide-based solid electrolyte powder). The powder form is preferable from the viewpoint of improving adhesion to active material particles and the like when the present invention is used in a lithium-ion secondary battery and improving battery characteristics. The present production method may include a pulverization step of pulverizing the sulfide-based solid electrolyte to obtain a powder form. By the pulverization step, a sulfide-based solid electrolyte in a block form may be pulverized to a powder form, or a particle diameter of a sulfide-based solid electrolyte in a powder form may be further reduced.

The average particle diameter of the powder is not particularly limited, but for example, from the viewpoint of improving the battery characteristics when the present invention is used for lithium-ion secondary batteries, the average particle diameter is preferably 5 µm or less, more preferably 2 µm or less, still more preferably 1.5 µm or less, and even more preferably 1.0 µm or less. On the other hand, from the viewpoint of ease of handling the powder, the average particle diameter is preferably 0.1 µm or more, more preferably 0.2 µm or more, and still more preferably 0.3 µm or more. In the present specification, the average particle diameter refers to a median diameter (D50) determined from a chart of a volume-based particle size distribution obtained by measuring a particle size distribution using a laser diffraction particle size distribution analyzer MT 3300 EXII manufactured by Microtrac.

According to the present production method, the oxygen adsorbed to the raw material is easily desorbed during heating and melting, so that the influence of the adsorbed oxygen in the obtained sulfide-based solid electrolyte is eliminated. More specifically, if it is assumed that the sulfide-based solid electrolyte is not affected at all by the adsorbed oxygen during heating and melting, it is considered that a bonding partner of P in the sulfide-based solid electrolyte is almost all S. In contrast, when the influence of the adsorbed oxygen is large, P-O bonds are likely to exist in the sulfide-based solid electrolyte, and a ratio of O in the bonding partners of P increases. That is, the sulfide-based solid electrolyte obtained by the present production method has a relatively small ratio of P-O bonds to a total amount of P-S bonds and P-O bonds. The ratio of such P-O bonds is preferably less than 5%, more preferably 3% or less, and still more preferably 2% or less. The ratio of P-O bonds can be determined from results of ³¹P-NMR measurement by a method described in the Examples. Examples of a preferred sulfide-based solid electrolyte obtained by the present production method include a sulfide-based solid electrolyte block containing Li, P, S, and Ha, in which Ha is at least one selected from the group consisting of F, Cl, Br, and I, in the sulfide-based solid electrolyte block, the ratio of P-O bonds to the total of the P-S bonds and the P-O bonds is less than 5%, and the sulfide-based solid electrolyte block has a thickness of 10 mm or less.

The lithium-ion conductivity of the sulfide-based solid electrolyte obtained by the present production method is not particularly limited since the lithium-ion conductivity varies depending on a composition thereof, but from the viewpoint of improving the battery characteristics when the present invention is used for lithium-ion secondary batteries, the lithium-ion conductivity is preferably 2.0 × 10⁻³ S/cm or more, more preferably 3.0 × 10⁻³ S/cm, and still more preferably 4.0 × 10⁻³ S/cm at 25°C. More preferably, when the sulfide-based solid electrolyte to be measured is made into a powder having an average particle diameter of 10 µm and compressed under a pressure of 380 MPa to form a powder compact, the lithium-ion conductivity measured at 25°C is in the above-mentioned range.

According to the present production method, the influence of the oxygen adsorbed on the raw material is eliminated when the raw material is heated and melted, so that a sulfide-based solid electrolyte having an excellent lithium-ion conductivity can be produced. The sulfide-based solid electrolyte obtained by the present production method is suitably used as a solid electrolyte material for use in, for example, lithium-ion secondary batteries.

### EXAMPLES

Hereinafter, the present invention is specifically described with reference to Examples, but the present invention is not limited thereto. Examples 2 to 5 are working examples, and Example 1 is a comparative example.

### (Production Example 1)

A sulfide-based solid electrolyte containing argyrodite crystals and with a composition of Li_{5.4}PS_{4.4}Cl_{1.6} was set as a target material, and powders of Li₂S (purity 99.98%, manufactured by Sigma), P₂S₅ (purity 99%, manufactured by Sigma), and LiCl (purity 99.99%, manufactured by Sigma) were mixed in a molar ratio of 1.9:0.5: 1.6. Into a heat-resistant container, 100 g of this powder was placed, which was then placed in a test furnace and heated by holding for 1 hour under conditions of a nitrogen atmosphere with a dew point of -50°C, a pressure of 1 atmosphere, and a temperature of 300°C (a heating rate of 5°C/min), and the heated raw material obtained was stored at room temperature in a dry air atmosphere with a dew point of -50°C for more than one day, and then used as a raw material in each example. The obtained raw material was subjected to heating evolved gas analysis (EGA-MS method) in a range of 0°C to 200°C in an environment not exposed to the air, and presence or absence of oxygen molecules was examined.

Measurement conditions for the EGA-MS method are as follows.

### <Thermal Decomposition Conditions>

Apparatus: Double Shot Pyrolyzer (Frontier Laboratories Ltd., PY-3030D)
Sample amount: 10 mg to 20 mg used
Heating conditions: held at 40°C for 5 min, heated to 200°C at 5°C/min, and held at 200°C for 0 min.
Atmosphere: He

### <GC/MS conditions>

Apparatus: 7890A manufactured by Agilent Technologies Japan, Ltd./JMS-T100GC manufactured by JEOL Ltd.
Column: Ultra ALLOY-DTM (2.5 m, I.D. 0.15 mmcp)
Oven temperature: 300°C
Inlet temperature: 300°C
Split ratio: 50:1
Detector voltage: 2,100 V
Ionization method: EI

### (Examples 1 to 4)

In each example, 100 g of the raw material obtained in Production Example 1 was introduced into the introduction portion whose dew point and temperature were adjusted to those shown in Table 1. During the introduction, the introduction portion was opened and the raw material was introduced into a glove box while maintaining the dew point at or below - 30°C and the oxygen concentration at or below 100 ppm. A volume of the introduction portion is 500 cm³, and nitrogen gas was supplied into the introduction portion at a replacement rate of 0.2 (min⁻¹). The oxygen concentration in the introduction portion was 10 ppm or less.

Next, the raw material was held in the introduction portion for 20 minutes, and then transferred by dropping into the heat-resistant container in the heating portion whose dew point and temperature were adjusted to those shown in Table 1. In the heating portion, N₂ gas was flowed at 3 L/min, and N₂ gas containing 0.05 vol% sulfur gas was supplied from the other gas line at a flow rate of 1 L/min. The raw material was heated and melted by holding the raw material in the heating portion for 1 hour. The oxygen concentration of the gas introduced into the heating portion was 10 ppm or less.

After heating and melting, the molten material was poured onto a carbon plate to have a thickness of 5 mm and then cooled. The obtained solid was then crushed into pieces of an appropriate size to obtain a sulfide-based solid electrolyte in a block form. The obtained sulfide-based solid electrolyte was evaluated as follows.

### (Example 5)

Powders of Li₂S (purity 99.98%, manufactured by Sigma), P₂S₅ (purity 99%, manufactured by Sigma), and LiCl (purity 99.99%, manufactured by Sigma) were stored at room temperature in a dry air atmosphere with a dew point of -50°C for one day or longer, and then mixed in a molar ratio of 1.9:0.5: 1.6. The prepared raw material was subjected to the heating evolved gas analysis (EGA-MS method) in the same manner as in Production Example 1, and presence or absence of oxygen molecules was examined. Into the introduction portion whose dew point and temperature were adjusted to those shown in Table 1, 100 g of the prepared raw material was introduced. During the introduction, the introduction portion was opened and the raw material was introduced into a glove box while maintaining the dew point at or below -30°C and the oxygen concentration at or below 100 ppm. A volume of the introduction portion is 500 cm³, and nitrogen gas was supplied into the introduction portion at a replacement rate of 0.2 (min⁻¹). The oxygen concentration in the introduction portion was 10 ppm or less.

Next, the raw material was held in the introduction portion for 20 minutes, and then transferred by dropping into the heat-resistant container in the heating portion whose dew point and temperature were adjusted to those shown in Table 1. In the heating portion, N₂ gas was flowed at 3 L/min, and in Example 5, N₂ gas containing sulfur gas was not used. The raw material was heated and melted by holding the raw material in the heating portion for 1 hour. The oxygen concentration of the gas introduced into the heating portion was 10 ppm or less.

After heating and melting, the molten material was cooled in the same manner as in Examples 1 to 4, and the obtained solid was then crushed into pieces of an appropriate size to obtain a sulfide-based solid electrolyte in a block form. The obtained sulfide-based solid electrolyte was evaluated as follows.

### (Evaluation)

### (P-O Bond Ratio Evaluation)

For the sulfide-based solid electrolyte obtained in each example, the ratio of P-O bonds was measured, and the influence of oxygen adsorbed to the raw material was evaluated. If it is assumed that the sulfide-based solid electrolyte is not affected at all by the adsorbed oxygen during heating and melting, it is considered that a bonding partner of P in the sulfide-based solid electrolyte is almost all S. Therefore, the amounts of P-S bonds and P-O bonds is measured, and it can be said that the lower the ratio of the P-O bonds to a total of the amounts of P-S bonds and P-O bonds, the more effectively the influence of oxygen adsorbed to the raw material during heating and melting can be eliminated.

The amount of each kind of bonds was measured by ³¹P-NMR measurement. Specific measurement conditions are as follows.
Apparatus name: AVANCE-III-HD400 manufactured by Bruker

In an NMR spectrum obtained by ³¹P-NMR measurement, bands with peaks observed in a range of 0 ppm to 20 ppm were determined to be derived from PO₄³⁻, bands with peaks observed in a range of 30 ppm to 50 ppm were determined to be derived from PO₃S³⁻, bands with peaks observed in a range of 60 ppm to 75 ppm were determined to be derived from PO₂S₂³⁻, bands with peaks observed in a range of 75 ppm to 78 ppm were determined to be derived from POS₃³⁻, and bands with peaks observed in a range of 78 ppm to 100 ppm were determined to be derived from PS₄³⁻, and the ratio of the P-O bonds was calculated from an area intensity of each band by (4 × [PO₄³⁻] + 3 × [POS₃³⁻] + 2 × [PO₂S₂³⁻] + [PO₃S³⁻])/ {4× ([PO₄³⁻] + [POS₃³⁻] + [PO₂S₂³⁻] + [PO₃S³⁻] + [PS₄³⁻])} × 100 (%).

The sulfide-based solid electrolyte of each example was pulverized to obtain a sulfide-based solid electrolyte powder having an average particle diameter of 10 µm to 100 µm, which was used as a sample. Sampling was performed in an environment not exposed to the air, and the measurement was performed using diammonium hydrogen phosphate as an external standard, which was 1.6 ppm.

### (Lithium-ion Conductivity Evaluation)

The sulfide-based solid electrolyte of each example was pulverized to obtain a sulfide-based solid electrolyte powder having an average particle diameter of 10 µm. The sulfide-based solid electrolyte powder was compressed under a pressure of 380 MPa to form a powder compact to be used as a measurement sample, and measured by using an AC impedance measuring device (potentiostat/galvanostat VSP, manufactured by Bio-Logic Sciences Instruments).

Measurement conditions were as follows: a measurement frequency of 100 Hz to 1 MHz, a measurement voltage of 100 mV, and a measurement temperature of 25°C.

The production conditions and evaluation results of each example are shown in Table 1.

**[Table 1]**

| | Target material | Adsorbed oxygen | Introduction portion/N₂ atmosphere | | | Heating portion/N₂ atmosphere | | | P-O bond | Lithium-ion conductivity |
|---|---|---|---|---|---|---|---|---|---|---|
| | | | Dew point | Replacement rate | Temperature | Dew point | Flow rate | Temperature | | |
| Ex. 1 | Li_{5.4}PS_{4.4}Cl_{1.6} Argyrodite | Detected | -70°C | 0.2/min | 80°C | -70°C | 3 L/min | 750°C | 5% | 1.7 mS/cm |
| Ex. 2 | Li_{5.4}PS_{4.4}Cl_{1.6} Argyrodite | Detected | -55°C | 0.2/min | 80°C | -60°C | 3 L/min | 750°C | 2% | 4.2 mS/cm |
| Ex. 3 | Li_{5.4}PS_{4.4}Cl_{1.6} Argyrodite | Detected | -45°C | 0.2/min | 80°C | -60°C | 3 L/min | 750°C | < 1% | 4.7 mS/cm |
| Ex. 4 | Li_{5.4}PS_{4.4}Cl_{1.6} Argyrodite | Detected | -30°C | 0.2/min | 80°C | -60°C | 3 L/min | 750°C | 3% | 3.1 mS/cm |
| Ex. 5 | Li_{5.4}PS_{4.4}Cl_{1.6} Argyrodite | Detected | -45°C | 0.2/min | 80°C | -60°C | 3 L/min | 750°C | 1% | 3.2 mS/cm |

In all of Examples 1 to 5, adsorbed oxygen was present on the raw material, but in Examples 2 to 5, in which the raw material was introduced into the introduction portion with a dew point in the range of -65°C to -25°C and then transferred to the heating portion, the resulting sulfide-based solid electrolyte had a low P-O bond ratio and a relatively high lithium-ion conductivity. On the other hand, in Example 1 in which the dew point in the introduction portion was -70°C, the P-O bond ratio of the obtained sulfide-based solid electrolyte was relatively high, and the lithium-ion conductivity was also relatively low. That is, it was confirmed that according to the present production method, it is possible to prevent the reaction between oxygen adsorbed to the raw material and other components in the raw material during heating and melting, and a sulfide-based solid electrolyte having an excellent lithium-ion conductivity can be produced.

As described above, the present specification discloses the following matters.
1. A method for producing a sulfide-based solid electrolyte using a production apparatus including an introduction portion and a heating portion, the method including:
   introducing a raw material into the introduction portion of the production apparatus; and
   transferring the raw material to the heating portion whose temperature is higher than that of the introduction portion, and then heating and melting the raw material,
   in which a dew point of the introduction portion is -65°C to -25°C.
2. The method for producing a sulfide-based solid electrolyte according to the above 1, in which the temperature of the heating portion is 400°C or higher, and the temperature of the introduction portion is 300° C or lower.
3. The method for producing a sulfide-based solid electrolyte according to the above 1 or 2, in which a difference in temperature between the heating portion and the introduction portion is 200°C or more.
4. The method for producing a sulfide-based solid electrolyte according to any one of the above 1 to 3, the method further including: supplementing a predetermined element during the heating and melting.
5. A sulfide-based solid electrolyte block, containing Li, P, S, and Ha,
   in which Ha is at least one selected from the group consisting of F, Cl, Br, and I,
   in the sulfide-based solid electrolyte block, a ratio of a P-O bond to a total of a P-S bond and the P-O bond is less than 5%, and
   the sulfide-based solid electrolyte block has a thickness of 10 mm or less.
6. The sulfide-based solid electrolyte block according to the above 5, in which when the sulfide-based solid electrolyte block is in a powder form having an average particle diameter of 10 µm and compressed under a pressure of 380 MPa to form a powder compact, a lithium-ion conductivity thereof measured at 25°C is 2.0 mS/cm or more.

Although the present invention has been described in detail with reference to a specific embodiment, it is apparent to those skilled in the art that various changes and modifications can be made without departing from the spirit and scope of the present invention. The present application is based on a Japanese patent application (No. 2022-009604) filed on January 25, 2022, the contents of which are incorporated herein by reference.

### REFERENCE SIGNS LIST

100 production apparatus
2. introduction portion
21 supply gas
22 exhaust gas
4 heating portion
41 supply gas
42 exhaust gas
43 heat-resistant container

## Claims

1. A method for producing a sulfide-based solid electrolyte using a production apparatus comprising an introduction portion and a heating portion, the method comprising:
introducing a raw material into the introduction portion of the production apparatus; and
transferring the raw material to the heating portion whose temperature is higher than that of the introduction portion, and then heating and melting the raw material,
wherein a dew point of the introduction portion is -65°C to -25°C.

2. The method for producing a sulfide-based solid electrolyte according to claim 1,
wherein the temperature of the heating portion is 400°C or higher, and the temperature of the introduction portion is 300° C or lower.

3. The method for producing a sulfide-based solid electrolyte according to claim 1 or 2,
wherein a difference in temperature between the heating portion and the introduction portion is 200°C or more.

4. The method for producing a sulfide-based solid electrolyte according to claim 1 or 2, the method further comprising supplementing a predetermined element during the heating and melting.

5. A sulfide-based solid electrolyte block, comprising Li, P, S, and Ha,
wherein Ha is at least one selected from the group consisting of F, Cl, Br, and I,
in the sulfide-based solid electrolyte block, a ratio of a P-O bond to a total of a P-S bond and the P-O bond is less than 5%, and
the sulfide-based solid electrolyte block has a thickness of 10 mm or less.

6. The sulfide-based solid electrolyte block according to claim 5,
wherein when the sulfide-based solid electrolyte block is in a powder form having an average particle diameter of 10 µm and compressed under a pressure of 380 MPa to form a powder compact, a lithium-ion conductivity thereof measured at 25°C is 2.0 mS/cm or more.
